# FASCICULE DE BREVET EUROPEEN

(11) **EP 0 881 653 B1**
(45) Date de publication et mention de la délivrance du brevet: **08.12.2004**
(21) Numéro de dépôt: 98410060.2
(22) Date de dépôt: 26.05.1998
(51) Int. Cl.: H01H 85/30

(54) **Dispositif porte-fusible tel un puits-fusible pour appareillage électrique**
Sicherungshaltervorrichtung von der Art einer Schachtsicherung für elektrische Geräte
Fuse-holder device such as a well fuse for electrical apparatus

(30) Priorité: 27.05.1997 FR 9706714
(43) Date de publication de la demande: 02.12.1998
(73) Titulaire: Schneider Electric Industries SAS, 92500 Rueil-Malmaison (FR)
(72) Inventeur: Rodriguez, Pascale, 38050 Grenoble Cedex 09 (FR); Mallet, Laurent, 38050 Grenoble Cedex 09 (FR); Filiputti, Huges, 38050 Grenoble Cedex 09 (FR)
(74) Mandataire: Ritzenthaler, Jacques

(56) Documents cités:
- EP-A- 0 170 186
- BE-A- 668 548
- DE-U- 29 605 370
- FR-A- 1 461 736

## Description

L'invention concerne un dispositif porte-fusible tel un puits fusible destiné à être associé à un appareillage électrique tel qu'un interrupteur et comprenant un puits destiné au logement d'une cartouche fusible et comportant un moyen de détection de l'état dégradé ou non dégradé de la cartouche fusible, ledit moyen étant relié mécaniquement à un moyen de commande de l'ouverture des contacts de l'appareil.

Un problème rencontré dans ce type de dispositif tient en ce que lors d'un dysfonctionnement de la cartouche fusible dû par exemple à son vieillissement (fusible légèrement détérioré par exemple), un échauffement excessif est engendré à l'intérieur du puits pendant le passage du courant nominal. Cet échauffement conduit au vieillissement thermique du puits, constitué le plus souvent de résine, lequel puits perd ses propriétés diélectriques. En outre, cet échauffement induit des contraintes mécaniques à l'intérieur du puits.

Par conséquent, ce puits n'étant pas destiné à être aisément interchangeable, il est nécessaire de le protéger d'un tel échauffement entraîné par le dysfonctionnement de la cartouche fusible.

Des dispositifs ont déjà été proposés pour résoudre ce problème, lesquels détectent l'état dégradé de la cartouche en mesurant les variations de pression à l'intérieur du puits.

Un tel dispositif est connu, par exemple, du document DE 296 05 370 U.

La présente invention propose un dispositif porte-fusible de conception simple, permettant de détecter de manière fiable, un éventuel état dégradé d'une cartouche-fusible de manière à protéger le puits fusible.

A cet effet, la présente invention a pour objet un dispositif porte-fusible selon la revendication 1.
- Selon une caractéristique particulière, le puits précité comporte un bouchon et la tige de commande précitée est montée mobile en translation à travers ce bouchon.
- Selon une caractéristique particulière, le moyen de détection est logé dans un évidement prévu dans le bouchon à son extrémité située vers la cartouche.
- Selon une autre caractéristique, le moyen à mémoire de forme est à mémoire double sens de manière à assurer un auto-réarmement.
- Selon une réalisation particulière, le moyen à mémoire de forme comporte un ressort en appui par l'une de ses deux extrémités contre une extrémité de la tige et par son extrémité opposée, contre une paroi du dit bouchon.
- Avantageusement, les positions de repos et active du ressort correspondent respectivement à un état décomprimé et à un état comprimé de ce dernier.
- Selon une autre réalisation, le moyen à mémoire de forme comprend un ressort à lame.
- Selon une autre caractéristique particulière, la lame précitée est montée dans un support logé dans un évidement du bouchon, la lame et le support étant respectivement en appui contre l'une des extrémités de la tige de commande et une paroi du bouchon.
- Selon une autre réalisation, le moyen à mémoire de forme comprend au moins une rondelle, montée dans un support, ladite au moins une rondelle et le support étant respectivement en appui contre l'une des extrémités de la tige de commande et une paroi du bouchon.
- Avantageusement, le moyen à mémoire de forme est réalisé en un alliage à base de cuivre.
- De préférence, la température de déclenchement du moyen à mémoire de forme est comprise entre 120°C et 140°C.
- Selon une autre caractéristique, la tige de commande est également commandée par le percuteur du fusible, de manière à être actionnée également, lors de la fusion de l'élément fusible. L'invention a également pour objet un puits-fusible et un interrupteur comportant un dispositif porte-fusible, comprenant les caractéristiques précédentes prises seules ou en combinaison.

Mais d'autres avantages et caractéristiques de l'invention apparaîtront mieux dans la description détaillée qui suit et se réfère aux dessins annexés donnés uniquement à titre d'exemple et dans lesquels :
- la figure 1 est une vue en coupe illustrant un dispositif porte-fusible, selon l'invention dans lequel est logé un fusible.
- les figures 2, 4 et 6 illustrent dans une vue en coupe, le bouchon d'un dispositif porte-fusible selon respectivement, trois réalisations de l'invention, en position de repos de la tige de commande.
- les figures 3, 5 et 7 sont des vues similaires aux précédentes, illustrant respectivement les trois réalisations de l'invention, la tige de commande étant en position d'ouverture des contacts..
- La figure 8 est une représentation graphique illustrant le fonctionnement du moyen de détection en alliage à mémoire de forme.

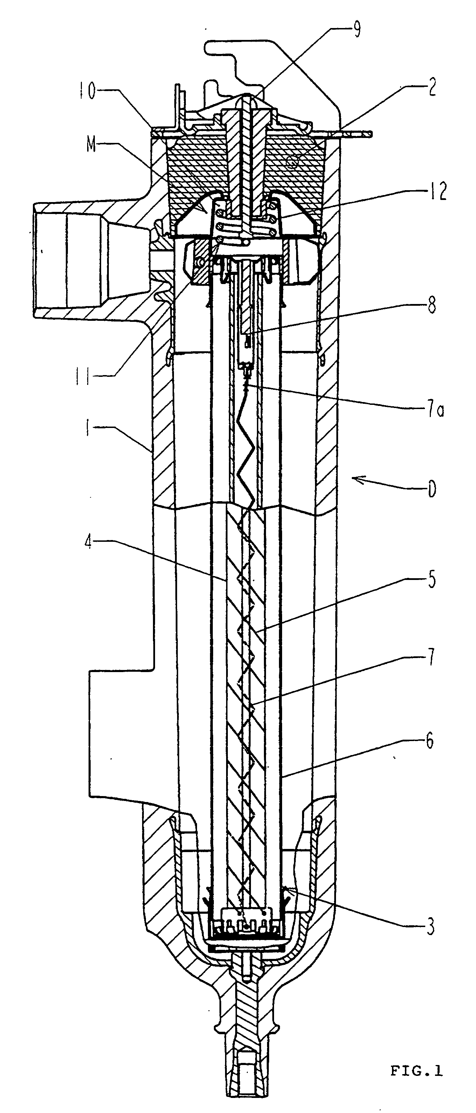

Sur la figure 1, on voit un dispositif porte-fusible D, communément appelé puits-fusible et destiné à être intégré à un appareillage électrique tel un interrupteur (non représenté). Ce puits-fusible D est constitué principalement par un puits 1 de forme allongée fermé par un bouchon 2 et dans lequel est logé et supporté un fusible moyenne tension 3. Ce fusible 3 est destiné à véhiculer le courant électrique entre un contact amont, par exemple une traversée, et le contact aval, par exemple une extrémité de câble.

Ce puits-fusible D assure également d'autres fonctions telles que, par exemple, l'isolation diélectrique entre les pièces sous tension et l'environnement extérieur ou la fonction d'enveloppe du sectionneur de mise à la terre du contact aval. Ces fonctions doivent être assurées pendant une période d'environ trente ans. C'est pourquoi, il est nécessaire de le protéger contre une dégradation pouvant être causée par un dysfonctionnement de la cartouche fusible 3 par un moyen de détection approprié M.

Cette cartouche-fusible 3 comprend de manière connue en soi, un noyau interne tubulaire 4 en un matériau isolant réfractaire, servant de support à un élément fusible 5 enroulé le long de l'axe de ladite cartouche 3. Ce noyau 4 équipé de l'élément fusible 5 est entouré coaxialement par une enveloppe externe tubulaire 6 en matériau électriquement isolant, avec interposition d'un espace annulaire. A l'intérieur du noyau 4 s'étend axialement un fil conducteur auxiliaire 7, notamment en tungstène, connecté électriquement en parallèle avec l'élément fusible 5 enroulé sur le noyau 4. L'une des extrémités 7a du fil 7 est reliée à un percuteur 8 susceptible de signaler la fusion de l'élément fusible 5, lorsque le courant circulant a dépassé un seuil prédéterminé. Ce percuteur 8 est destiné à agir sur une tige 9 montée coulissante à l'intérieur du bouchon 2 et destinée à commander l'ouverture des contacts de l'interrupteur.

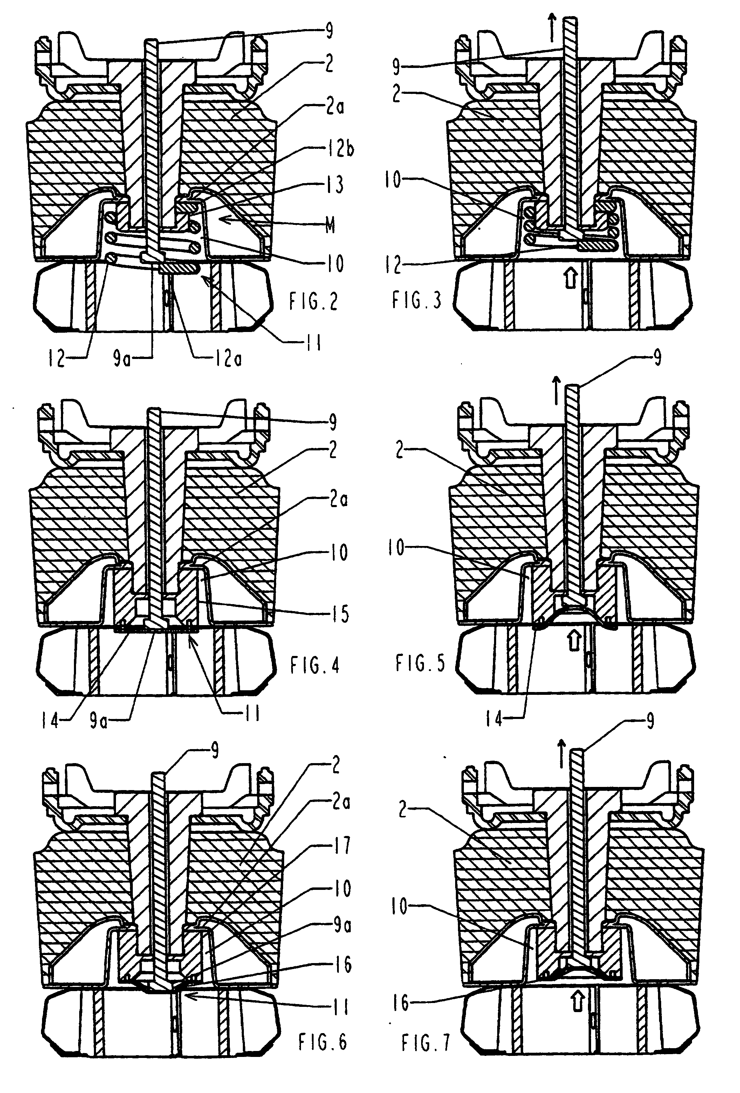

En se reportant également aux figures 2 à 7, on voit que le bouchon 2 comporte également un évidement 10 situé du côté du fusible 3 et destiné à loger un système 11 comportant un alliage à mémoire de forme constituant un moyen de détection M d'un échauffement anormal à l'intérieur du puits 1.

Selon la réalisation illustrée sur les figures 2 et 3, ce moyen à mémoire de forme 11 est constitué par un ressort 12, ce ressort 12 comportant une première extrémité 12a fixée à l'extrémité 9a de la tige 9, située en regard de la cartouche fusible 3 et une seconde extrémité 12b, fixée à un support 13 en appui contre une paroi 2a intérieure du bouchon 2.

Selon la réalisation illustrée sur les figures 4 et 5, ce moyen 11 comporte une lame 14 formant un ressort, fixée dans un support de lame 15, ledit support 15 et la lame 14 étant montés autour de la tige de commande 9, dans l'évidement précité 10. La lame 14 est fixée à l'extrémité 9a de la tige 9, tandis que le support 15 est fixé sur la paroi interne 2a du bouchon 2.

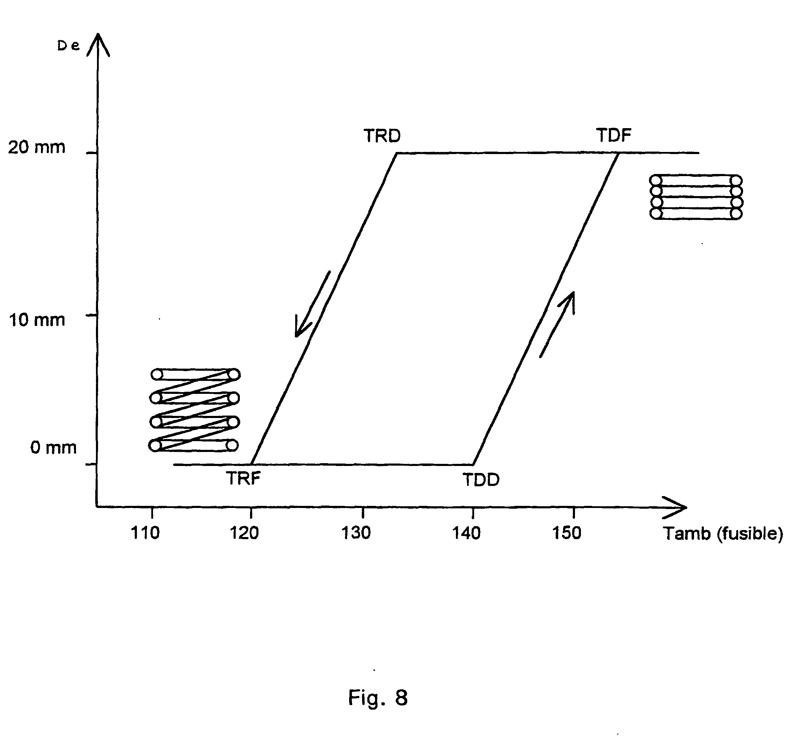

Selon la réalisation illustrée sur les figures 6 et 7, ce moyen 11 comprend une rondelle 16 ou un empilement de rondelles, montées dans un support 17 autour de la tige 9 dans l'évidement précité 10. Dans cette réalisation également la rondelle 16 est fixée à l'extrémité 9a de la tige 9, tandis que, le support 17 est fixé sur une paroi interne 2a du bouchon 2.
On notera que l'élément en alliage à mémoire de forme 11 sera avantageusement constitué par une pièce à base de cuivre (Cu - Al - Ni), ce type d'AMF, étant un AMF haute température, se transformant au dessus de 100°C.

On décrira ci-après, le fonctionnement du puits fusible D tout d'abord lorsque la cartouche fusible 3 n'est pas dégradée, puis pour un état dégradé de cette dernière. Dans ce dernier cas, on se référera plus particulièrement à la figure 8 qui représente l'évolution de la déformation De de l'AMF (déflexion) par rapport à la température à l'intérieur du puits.

De manière classique, lorsque le courant dépasse un seuil prédéterminé, la fusion du fusible 3 entraîne la rupture du fil de tungstène 7, lequel entraîne la libération du percuteur 8. Ce percuteur 8 entraîne alors la tige de commande 9 vers l'extérieur du bouchon 2 afin de commander l'ouverture des contacts de l'interrupteur, le ressort restant dans sa position initiale, non comprimé, spires disjointes.

En fonctionnement normal (figures 2,4,6), la cartouche 3 est traversée par le courant nominal et la tige de commande est en position basse. Lorsque la cartouche 3 est dans un état dégradé, un échauffement se produit à l'intérieur du puits D. Lorsque le puits fusible D atteint la température de déclenchement TDD de l'AMF (de préférence entre 120° C et 140° C), le système AMF 11 (ressort, lame en flexion ou rondelles, type rondelle Belleville), se déforme et entraîne la tige de commande 9 vers l'extérieur du bouchon 2 (fig. 3, 5 et 7) en appliquant un effort de préférence égal ou supérieur à 10 daN sur une course de 10 mm (W=1J). Ce déclenchement de l'ouverture des contacts par le système AMF donnera donc lieu au remplacement de la cartouche fusible 3.

La pièce AMF ayant subi un traitement dit d'éducation, elle fonctionne avec un effet mémoire double sens. Ainsi, lors de l'échauffement, elle actionne la tige de commande 9 à une mécanique de 1J. Au refroidissement, lorsque la température du puits atteint TRD, correspondant au début du réarmement, la pièce en AMF revient spontanément vers une forme basse température, forme obtenue à une température TRF correspondant à la fin du réarmement.

L'effet mémoire à double sens se traduit d'une part, par un auto-réarmement du système AMF, sans qu'une intervention de l'extérieur soit nécessaire et d'autre part, par le fait que le verrouillage de la protection est néanmoins assuré tant que la température n'est pas inférieure à la température TRF correspondant à la fin du réarmement.
L'invention s'applique avantageusement aux puits fusibles intégrés dans les interrupteurs moyenne tension.

On a donc réalisé grâce à l'invention, un dispositif permettant de détecter de manière simple et fiable, un éventuel état dégradé de la cartouche fusible, par exemple, lorsque le ruban du fusible est légèrement sectionné.

Bien entendu, l'invention n'est pas limitée aux modes de réalisation décrits et illustrés qui n'ont été donnés qu'à titre d'exemple.

## Revendications

1. Dispositif porte-fusible destiné à être associé à un appareillage électrique tel qu'un interrupteur et comprenant un puits (1) destiné au logement d'une cartouche fusible (3) et comportant un moyen de détection de l'état dégradé ou non dégradé de la cartouche fusible (3), le dit moyen étant relié mécaniquement à un moyen de commande (9) de l'ouverture des contacts de l'appareil, le moyen de détection précité (M) comprenant un moyen à mémoire de forme (11), ledit moyen à mémoire de forme (11) étant déformable entre un état de repos correspondant à un état non dégradé de la cartouche fusible (3) et une position active engendrée par une élévation significative de la température à l'intérieur du puits (1) liée à une dégradation de la cartouche- fusible (3) **caractérisé en ce que** ledit moyen à mémoire de forme (11) est en appui contre le moyen de commande précité (9) et le dit moyen à mémoire de forme (11) dans cet état actif, entraîne directement une tige de commande (9) dans une position d'ouverture des contacts de l'appareil.

2. Dispositif selon la revendication 1, **caractérisé en ce que** le puits précité (1) comporte un bouchon (2) et **en ce que** la tige de commande précitée (9) est montée mobile en translation à travers ce bouchon (2).

3. Dispositif selon la revendication 1 ou 2 **caractérisé en ce que** le moyen de détection M est logé dans un évidement (10) prévu dans le bouchon (2) à son extrémité (2a) située vers la cartouche (3).

4. Dispositif selon l'une quelconque des revendications 1 à 3, **caractérisé en ce que** le moyen à mémoire de forme (11) est à mémoire double sens de manière à assurer un auto-réarmement.

5. Dispositif selon l'une quelconque des revendications 1 à 4, **caractérisé en ce que** le moyen à mémoire de forme (11) comporte un ressort (12) en appui par l'une (12a) de ses deux extrémités contre une extrémité (9a) de la tige (9) et par son extrémité opposée (12 b), contre une paroi (2a) du dit bouchon (2).

6. Dispositif selon la revendication 5, **caractérisé en ce que** les positions de repos et active du ressort (12) correspondent respectivement à un état décomprimé et à un état comprimé de ce dernier.

7. Dispositif selon l'une quelconque des revendications 1 à 4, **caractérisé en ce que** le moyen à mémoire de forme (11) comprend un ressort à lame (14).

8. Dispositif selon la revendication 7, **caractérisé en ce que** la lame précitée (14) est montée dans un support (15) logé dans un évidement (10) du bouchon (2) , la lame (14) et le support (15) étant respectivement en appui contre l'une (9a) des extrémités de la tige de commande (9) et une paroi (2a) du bouchon (2).

9. Dispositif selon l'une quelconque des revendications 1 à 4, **caractérisé en ce que** le moyen à mémoire de forme (11) comprend au moins une rondelle (16) , montée dans un support (17), ladite au moins une rondelle (16) et le support (17) étant respectivement en appui contre l'une (9a) des extrémités de la tige de commande (9) et une paroi (2a) du bouchon (2).

10. Dispositif selon l'une quelconque des revendications précédentes, **caractérisé en ce que** le moyen à mémoire de forme (11) est réalisé en un alliage à base de cuivre.

11. Dispositif selon l'une quelconque des revendications précédentes, **caractérisé en ce que** la température de déclenchement du moyen à mémoire de forme (11) est comprise entre 120°C et 140°C.

12. Dispositif selon l'une quelconque des revendications précédentes **caractérisé en ce que** la tige de commande(9) est également commandée par le percuteur (8) du fusible, de manière à être actionnée également, lors de la fusion de l'élément fusible (5) de la cartouche (3).

13. Puits-fusible, **caractérisé en ce qu'**il comporte un dispositif selon l'une quelconque des revendications 1 à 12.

14. Interrupteur comportant un dispositif selon l'une quelconque des revendications précédentes.

## Patentansprüche

1. Sicherungshalteranordnung zur Kombination mit einem elektrischen Schaltgerät, wie z.B. einem Lastschalter, mit einem Schacht, der zur Aufnahme eines Sicherungseinsatzes dient und ein Detektionsmittel zur Erkennung des beschädigten oder unbeschädigten Zustands des Sicherungseinsatzes umfaßt, welches genannte Mittel mechanisch mit einem Steuermittel zur Abschaltsteuerung der Kontakte des Schaltgeräts verbunden ist, wobei das genannte Detektionsmittel (M) ein Formgedächtnismittel (11) umfaßt, welches Formgedächtnismittel (11) zwischen einem Ruhezustand entsprechend einem unbeschädigten Zustand des Sicherungseinsatzes (3) und einer Arbeitsstellung verformt werden kann, die durch einen, eine Beschädigung des Sicherungseinsatzes abbildenden wesentlichen Temperaturanstieg im Inneren des Schachtes (1) verursacht wird, **dadurch gekennzeichnet, daß** sich das genannte Formgedächtnismittel (11) am genannten Steuermittel (9) abstützt und das genannte Formgedächtnismittel (11) in dieser Arbeitsstellung direkt eine Steuerstange (9) in eine Ausschaltstellung der Kontakte des Schaltgeräts überführt.

2. Anordnung nach Anspruch 1, **dadurch gekennzeichnet, daß** der genannte Schacht (1) einen Stopfen (2) umfaßt und die genannte Steuerstange (9) geradlinig durch diesen Stopfen (2) hindurch verschoben werden kann.

3. Anordnung nach Anspruch 1 oder 2, **dadurch gekennzeichnet, daß** das Detektionsmittel M in einer im Stopfen (2), an dessen dem Sicherungseinsatz (3) zugewandeten Ende (2a) ausgebildeten Ausnehmung (10) angeordnet ist.

4. Anordnung nach irgendeinem der Ansprüche 1 bis 3, **dadurch gekennzeichnet, daß** das Formgedächtnismittel (11) als Mittel mit Zweirichtungsgedächtnis ausgebildet ist, um so eine automatische Rückstellung zu gewährleisten.

5. Anordnung nach irgendeinem der Ansprüche 1 bis 4, **dadurch gekennzeichnet, daß** das Formgedächtnismittel (11) eine Feder (12) umfaßt, die sich mit einem (12a) ihrer beiden Enden an einem Ende (9a) der Stange (9) und mit ihrem entgegengesetzten Ende (12b) an einer Wand (2a) des genannten Stopfens (2) abstützt.

6. Anordnung nach Anspruch 5, **dadurch gekennzeichnet, daß** die Ruhestellung und die Arbeitsstellung der Feder (12) einem entspannten bzw. gespannten Zustand dieser Feder entsprechen.

7. Anordnung nach irgendeinem der Ansprüche 1 bis 4, **dadurch gekennzeichnet, daß** das Formgedächtnismittel (11) eine Blattfeder (14) umfaßt.

8. Anordnung nach Anspruch 7, **dadurch gekennzeichnet, daß** das genannte Federblatt (14) an einem, in einer Ausnehmung (10) des Stopfens (2) angeordneten Träger (15) montiert ist, wobei sich das Federblatt (14) und der Träger (15) an einem (9a) der Enden der Steuerstange (9) bzw. an einer Wand (2a) des Stopfens (2) abstützen.

9. Anordnung nach irgendeinem der Ansprüche 1 bis 4, **dadurch gekennzeichnet, daß** das Formgedächtnismittel (11) mindestens eine, auf einem Träger (17) montierte Scheibe (16) umfaßt, welche mindestens einfach ausgeführte Scheibe (16) und welcher Träger (17) sich an einem (9a) der Enden der Steuerstange (9) bzw. an einer Wand (2a) des Stopfens (2) abstützen.

10. Anordnung nach irgendeinem der vorhergehenden Ansprüche, **dadurch gekennzeichnet, daß** das Formgedächtnismittel (11) aus einer Kupferlegierung besteht.

11. Anordnung nach irgendeinem der vorhergehenden Ansprüche, **dadurch gekennzeichnet, daß** die Umwandlungstemperatur des Formgedächtnismittels (11) zwischen 120 und 140°C liegt.

12. Anordnung nach irgendeinem der vorhergehenden Ansprüche, **dadurch gekennzeichnet, daß** die Steuerstange (9) auch über den Schlagstift (8) der Sicherung angesteuert wird, derart daß diese Stange beim Durchschmelzen des Schmelzleiters (5) des Sicherungseinsatzes (3) ebenfalls betätigt wird.

13. Sicherungsschacht **dadurch gekennzeichnet, daß** er eine Anordnung nach irgendeinem der Ansprüche 1 bis 12 umfaßt.

14. Lastschalter mit einer Anordnung nach irgendeinem der vorhergehenden Ansprüche.

## Claims

1. Fuse-carrier device designed to be associated with an electrical apparatus such as a switch and comprising a well (1) designed for housing a fuse cartridge (3) and comprising detection means for detecting the degraded or non-degraded state of the fuse cartridge (3), said means being mechanically connected to a control means (9) commanding opening of the contacts of the apparatus, the above-mentioned detection means (M) comprising a shape memory means (11), said shape memory means (11) being deformable between a rest state corresponding to a non-degraded state of the fuse cartridge (3) and an active position generated by a significant increase of the temperature inside the well (1) connected to a degradation of the fuse cartridge (3), **characterized in that** said shape memory means (11) press against the above-mentioned control means (9) and said shape memory means (11) in this active state drive a control rod (9) directly to an open position of the contacts of the apparatus.

2. Device according to claim 1, **characterized in that** the above-mentioned well (1) comprises a plug (2) and that the above-mentioned control rod (9) is mounted movable in translation through this plug (2).

3. Device according to claim 1 or 2, **characterized in that** the detection means M are housed in a housing (10) provided in the plug (2) at its end (2a) situated towards the cartridge (3).

4. Device according to any one of the claims 1 to 3, **characterized in that** the shape memory means (11) are a two-way memory means so as to perform self-resetting.

5. Device according to any one of the claims 1 to 4, **characterized in that** the shape memory means (11) comprise a spring (12) pressing via one (12a) of its two ends against an end (9a) of the rod (9) and via its opposite end (12b) against a wall (2a) of said plug (2).

6. Device according to claim 5, **characterized in that** the rest and active positions of the spring (12) correspond respectively to a decompressed state and a compressed state of the latter.

7. Device according to any one of the claims 1 to 4, **characterized in that** the shape memory means (11) comprise a leaf spring (14).

8. Device according to claim 7, **characterized in that** the above-mentioned leaf (14) is mounted in a support (15) housed in a recess (10) of the plug (2), the leaf (14) and support (15) being respectively pressing against one (9a) of the ends of the control rod (9) and a wall (2a) of the plug (2).

9. Device according to any one of the claims 1 to 4, **characterized in that** the shape memory means (11) comprise at least one washer (16) mounted in a support (17), said at least one washer (16) and the support (17) respectively pressing against one (9a) of the ends of the control rod (9) and a wall (2a) of the plug (2).

10. Device according to any one of the foregoing claims, **characterized in that** the shape memory means (11) are made from a copper-based alloy.

11. Device according to any one of the foregoing claims, **characterized in that** the triggering temperature of the shape memory means (11) is comprised between 120°C and 140°C.

12. Device according to any one of the foregoing claims, **characterized in that** the control rod (9) is also controlled by the fuse striker (8) so as to also be actuated when the fusible element (5) of the cartridge (3) melts.

13. Fuse well, **characterized in that** it comprises a device according to any one of the claims 1 to 12.

14. Switch comprising a device according to any one of the foregoing claims.
